# EUROPÄISCHE PATENTANMELDUNG

(11) **EP 1 213 051 A1**
(43) Veröffentlichungstag der Anmeldung: **12.06.2002**
(21) Anmeldenummer: 01128352.0
(22) Anmeldetag: 30.11.2001
(51) Int. Cl.: B01J 2/12, G01N 15/02

(54) **Verfahren zur Überwachung und Regelung eines industriellen Granulationsprozesses**

(30) Priorität: 08.12.2000 DE 10061085
(71) Anmelder: BASF AKTIENGESELLSCHAFT, 67056 Ludwigshafen (DE)
(72) Erfinder: Reuvers, Johannes G., Dr., 67591 Hohen-Sülzen (DE); Heffels, Camiel, Dr., 64579 Gernsheim (DE); Wammes, Wino, Dr., 7617 JC Bergen op Zoom (NL); Rädle, Matthias, Dr., 67273 Weisenheim am Berg (DE); Reindel, Klaus, 67454 Hassloch (DE); Ettmüller, Jürgen, 67454 Hassloch (DE); Nitzschmann, Robert E., Dr., 67227 Frankenthal (DE)
(74) Vertreter: Isenbruck, Günter, Dr.

(57) **Zusammenfassung**

Die Erfindung bezieht sich auf ein Verfahren zur Überwachung und Regelung eines industriellen Granulationsprozesses in großtechnischen Anlagen mit nachfolgenden Verfahrensschritten:
Zunächst werden Bildsequenzen fallender Granulatpartikel (5) mittels einer Farbkamera (10) und einer Auflichtquelle (14) aufgenommen. Anhand der Bildsequenzen werden prozeßspezifische Parameter (22.1, 22.2, ..., 22.n) in einer der Farbkamera (10) nachgeordneten Recheneinheit (17, 21) ermittelt, in welcher die Bildsequenzen in Echtzeit ausgewertet werden. Die ermittelten, prozeßspezifischen Parameter (22.1, 22.2, ..., 22.n) werden an eine Regelstruktur (30) übermittelt, die einen Qualitätsregler (33) und einen Quantitätsregler (39) umfaßt und die Granulieranlage mittels Fuzzy-Logik-Bausteinen (33.1, 33.2; 40,41) regelt.

## Beschreibung

Die Erfindung bezieht sich auf ein Verfahren zur Überwachung und Regelung eines industriellen Granulationsprozesses, insbesondere auch der automatisierten Inspektion des erhaltenen Endproduktes.

Ein Teilbereich der Herstellung von Düngemitteln ist der Granulationsprozeß. Dabei werden aus einem flüssigen Produktgemisch, der sogenannten Maische, feste Düngemittelgranulate hergestellt. Bei der Granulatbildung aus dem flüssigen Produktgemisch kommt es zu unterschiedlichen Granulationsergebnissen, d.h. Granulat unterschiedlicher Korngröße. Die sich an den Granulationsprozeß anschließende Nachbehandlung sowie eine eventuell erforderliche Produkteinfärbung ergibt das fertige Endprodukt. Die Düngemittelgranulate unterliegen einem strengen Qualitätsanspruch. Neben der chemischen Zusammensetzung sowie den physikalischen Eigenschaften der Granulate stellt der mittlere Korndurchmesser (d₅₀) sowie die Verteilungsbreite eine weitere wichtige Qualitätsgröße dar. Eine gleichbleibende Korngrößenverteilung ist deswegen erstrebenswert, da sie dem Kunden die gleichmäßige Ausbringung des Düngemittels, insbesondere dessen gleichmäßige maschinelle Ausbringung wesentlich erleichtert. Neben der Korngrößenverteilung, die sich aus dem Granulationsprozeß aus dem flüssigen Produktgemisch einstellt, ist auch die Geometrie, in der das Granulat vorliegt, von Bedeutung. Die Komplexität des gesamten Granulationsprozesses macht diesen für eine mathematische Modellbildung kaum zugänglich.

Ein Granulationsteil einer Granulationsanlage besteht im wesentlichen aus den Komponenten Granuliertrommel, Trockentrommel, Elevator, den Granulationssieben sowie der Kreislaufklappe und den Mühlen. An den Granulationsteil der Anlage schließt sich ein Nachbehandlungsteil an, der das von der Granulationsanlage gelieferte Korn weiterbearbeitet und einem Silo zuführt. In der Granuliertrommel wird Maische auf einen Rücklauf aufgespritzt. Diese Maische bindet sich an die Partikel des Rücklaufs und führt so zu einem Kornwachstum. In der Granulationsanlage wird von einem Absauggebläse ein ständiger Luftstrom erzeugt. Da Granulier- und Trockentrommel über die Granuliertrommelauslaßschurre miteinander verbunden sind, entsteht so ein Luftstrom von der Granuliertrommel über die Schurre und die Trockentrommel zum Absauggebläse, wodurch bereits eine Vortrocknung des Produktes in der Granuliertrommel erreicht wird. Das in der Granuliertrommel entstandene Produkt fällt anschließend durch die Granuliertrommelauslaßschurre in die Trockentrommel. In dieser Granuliertrommelauslaßschurre sind mehrere Reinigungsklappen vorgesehen. Der die Granulieranlage bedienende Operator entnimmt an dieser Stelle in gewissen Zeitabständen Proben aus einem Salzstrom, um so eine Entscheidung über die weitere Fahrweise der Anlage treffen zu können. An der Granuliertrommelauslaßschurre kann eine Kamera vorgesehen sein, die Videobilder für eine nachgeschaltete Korngrößenanalyse liefert.

Zusätzlich zum Massenstrom aus der Granuliertrommel kann auch noch der Rücklauf aus dem Nachbehandlungsteil der Granulieranlage in die Trockentrommel geleitet werden. Dieser Rücklauf kann auch der Granuliertrommel zugeführt werden. Vom Nachbehandlungsrücklauf ist normalerweise weder der Durchsatz noch die Partikelgrößenverteilung bekannt. Im Normalbetrieb der Granulieranlage beträgt der Durchsatz des Nachbehandlungsrücklaufes jedoch nur einen Bruchteil des Massenstroms, der aus der Granuliertrommel in die Trockentrommel gelangt. Die Hauptaufgabe der Trockentrommel besteht darin, dem Produkt den größten Teil des darin enthaltenen Wassers zu entziehen. Dies geschieht in der Regel durch die Zufuhr von Heißluft in die Trommel. Die Trocknung des Granulierproduktes erfolgt im Gleichstromverfahren oder im Gegenstromverfahren. Im Gleichstromverfahren strömt die Heißluft in der gleichen Richtung durch die Trommel wie das darin enthaltene Produkt. Diese Vorgehensweise wird zum Beispiel wegen der Temperaturempfindlichkeit des Granulats angewendet, da so das heiße Gas möglichst mit dem feuchten Produkt zusammengeführt wird. In der Trockentrommel kann es unter Umständen noch zu einem - meist geringfügigen - Kornwachstum kommen. Dieser Effekt ist jedoch sehr oft vernachlässigbar. Nach der Passage der Trockentrommel gelangt das getrocknete Produkt über den Elevator und das Elevatorauslaufband zu den Sieben. Der Durchsatz auf dem Elevatorauslaufband, der einer Kreislaufmenge entspricht, kann mit einer Waage in Tonnen pro Stunde gemessen werden. Dieses Signal ist für eine Regelung als Eingangssignal verwendbar. Mit Hilfe der Siebe wird der vom Elevatorauslaufband gelieferte Massenstrom in den drei Kornfraktionen Feinkorn, Gutkorn und Grobkorn aufgetrennt. Die Qualität dieser Siebung ist auch vom Verschmutzungsgrad der Siebbeläge abhängig. Sind diese durch Produktreste verschmutzt, wird der ankommende Massenstrom nicht mehr verläßlich in die drei Kornfraktionen fraktioniert. In diesem Fall wird die Anlagenbedienung eine Siebreinigung veranlassen. Die vom Sieb kommenden Kornfraktionen werden getrennt bearbeitet. Das Feingut wird ohne weitere Behandlung direkt zum Granuliertrommeleinlauf zurückgeführt; der Grobanteil wird in Kettenmühlen gemahlen, bevor auch der Grobanteil zum Granuliertrommeleinlauf gelangt. Vom Gutkornanteil kann über eine Kreislaufklappe ein beliebiger Anteil zum Nachbehandlungsteil der Anlage weitergeleitet werden. Dieser Massenstrom des Ablaufs zum Nachbehandlungsteil kann ebenfalls gemessen und über einen Regler in der Meßwarte der Granulieranlage geregelt werden. Diesem Regler kann ein bestimmter Durchsatz für die Ablaufmenge zum Nachbehandlungsteil vorgegeben werden. Der Regler übernimmt die Regelung einer Kreislaufklappenstellung entsprechend. Die Einstellung dieser Führungsgröße wird vom Anlagenbediener in der Meßwarte der Granulieranlage vorgenommen. Das in der Granulieranlage verbleibende Gutkorn bildet zusammen mit dem Fein- und dem gemahlenen Grobkorn den Rücklauf in die Granuliertrommel.

In einer Granulationsanlage spielen die Abhängigkeiten beim eigentlichen Kornwachstum eine entscheidende Rolle. Die Größe des Kornwachstums ist von verschiedenen Faktoren abhängig, so beispielsweise dem Durchsatz der aufgespritzten Maische, dem Rücklauf sowie der Dampfbeaufschlagung. Weitere die Granulation beeinflussende Faktoren sind die Temperatur in der Granuliertrommel, der Wassergehalt der eingespritzten Maische, die Rohstoffzusammensetzung der Maische und der Unterdruck, mit dem die Granuliertrommel abgesaugt wird. Durch Manipulation dieser Größen kann eine Veränderung des Granulationsergebnisses bewirkt werden. Dabei werden vor allem die Größen Maischedurchsatz, Rücklaufmenge und Dampfdurchsatz zur gezielten Steuerung des Kornspektrums eingesetzt. Ein gröberes Granulationsergebnis am Auslauf der Granuliertrommel kann beispielsweise durch eine Verringerung des Rücklaufs, durch eine Erhöhung des Dampfdurchsatzes oder durch eine Erhöhung des Maischedurchsatzes erreicht werden. In umgekehrter Richtung hat eine Erhöhung des Rücklaufes, eine Verringerung von Maische- bzw. Dampfdurchsatz ein feineres Granulationsergebnis zur Folge. Dadurch eröffnen sich mehrere Beeinflussungsmöglichkeiten des Kornspektrums am Ausgang der Granuliertrommel. Granulationsanlagen werden in der Regel von nur wenigen Personen bedient. Eine Person entnimmt in gewissen Abständen Proben aus dem Salzstrom, der durch die Granuliertrommelauslaßschurre in die Trockentrommel fällt und begutachtet das Granulationsergebnis. Von dieser Begutachtung hängt die weitere Vorgehensweise ab. Generell wird zwischen drei Anlagenzuständen unterschieden. Diese Zustände werden mit den Begriffen "zu fein", "gut" und "zu grob" beschrieben. Diese Begriffe beziehen sich auf das vom Anlagenbediener gewünschte Kornspektrum.

Ist das Kornspektrum zu fein, wird der Granulierer eine oder mehrere der Reinigungsklappen öffnen, so daß durch den in der Trockentrommel herrschenden Unterdruck Falschluft in die Trockentrommel eingesaugt wird. Dies hat zur Folge, daß die Granuliertrommel schwächer abgesaugt wird, wodurch das Produkt in der Granuliertrommel länger feucht bleibt. Dies hat eine stärkere Granulation zur Folge, d.h. das Kornspektrum wird gröber.

Handelt es sich um ein sehr feines Kornspektrum, so kann der Granulierer zusätzlich Dampf in die Granuliertrommel einleiten, um so das Granulationsergebnis zu verbessern.

Stellt der Granulierer hingegen ein zu grobes Kornspektrum fest, so werden zunächst geöffnete Reinigungsklappen geschlossen, die sich an der Granuliertrommelauslaßschurre befinden. Durch diese Maßnahme wird die Granuliertrommel stärker abgesaugt, wodurch das Granulationsergebnis feiner wird, da das Produkt in der Granuliertrommel schneller antrocknet. Sind die Reinigungsklappen geschlossen, wird der Anlagenfahrer in der Meßwarte den Rücklauf erhöhen. Dies geschieht durch eine Verringerung der Ablaufmenge des Granulats zum Nachbehandlungsteil. Durch diese Maßnahme gelangt eine größere Menge von Gutkorn über den Rücklauf in die Granuliertrommel. Dieses Gutkorn wird nicht in den Kettenmühlen zermahlen, sondern gelangt unbearbeitet zurück in die Granuliertrommel. Dieses Gutkorn wird zusammen mit dem restlichen Rücklauf weiter aufgranuliert. Dadurch wird zunächst ein noch etwas gröberes Granulationsergebnis erhalten, da das Gutkorn aus dem Rücklauf weiter wächst. Das Granulationsergebnis wird also zunächst noch gröber als vor dem Eingriff.

Erst wenn der erhöhte Grobanteil in den Kettenmühlen zu Feinkorn zermahlen ist und als solches im Rücklauf zur Verfügung steht, kann das gewünschte Abnehmen des mittleren Korndurchmessers erreicht werden. Hat der mittlere Korndurchmesser wie gewünscht abgenommen, kann die Ablaufmenge des Granulats zum Nachbehandlungsteil wieder auf den zuvor eingestellten Wert erhöht werden. In bestimmten Anlagenzuständen kann es vorkommen, daß keine ausreichende Menge an Gutkorn im Kreislauf vorhanden ist. Eine Abnahme der Rücklaufmenge hingegen kann aber lediglich dann erreicht werde, wenn nach dem Sieben eine ausreichende Menge an Gutkorn zur Verfügung steht. Ist in diesem Falle das Granulationsergebnis zu grob, so wirkt sich dies nicht negativ aus, da in diesem Fall der Rücklauf in die Granuliertrommel erhöht werden muß. Ist das Granulationsergebnis jedoch zu fein und reicht der in der Kreislaufmenge vorhandene Gutkornanteil nicht aus, um die Masse der aufgespritzten Maische zu kompensieren, so kann die Massenbilanz zwischen eingetragener Masse und Ablauf nicht ausgeglichen werden. In diesem Falle wird der Rücklauf nicht wie gewünscht sinken, obwohl über die Kreislaufklappe der gesamte Gutkornanteil zum Nachbehandlungsteil abgetrennt wird. Im Gegenteil wird dieser sogar weiter zunehmen. Dies hat zur Folge, daß durch Ansteigen des Rücklaufes das Granulat feiner und feiner wird und somit immer weniger Gutkorn zur Verfügung steht. Die Anlage gerät in einen kritischen Zustand. In diesem Falle wird Dampf in die Granuliertrommel eingeleitet, um die Granulation zu unterstützen. Dadurch wird ein gröberes Kornspektrum erhalten, was eine erwünschte Zunahme des Gutkornanteils nach sich zieht. Damit kann eine Verringerung des Rücklaufs erzielt werden. Reicht der Gutkornanteil aus, um die Rücklaufmenge zu reduzieren, verringert der Granulierer wieder die Dampfzugabe. Durch diese Vorgehensweise wird die Granulationshilfe Dampf recht sparsam eingesetzt.

Aus der vorstehend grob vereinfacht wiedergegebenen Prozeßbeschreibung eines industriell ablaufenden Granulationsprozesses wird dessen Komplexität deutlich. Die vielen Interdependenzen zwischen Regelungseingriffen machen die Beherrschung des Granulationsprozesses bzw. dessen Regelung abhängig vom Können und der Erfahrung der die Anlage bedienenden Personen.

Ausgehend vom skizzierten technischen Problem liegt der Erfindung daher die Aufgabe zugrunde, eine Granulieranlage prozeßtechnisch zu automatisieren und deren Verhalten auf Regelungseingriffe transparenter zu gestalten.

Erfindungsgemäß wird diese Aufgabe durch ein Verfahren zur Überwachung und Regelung eines industriellen Granulationsprozesses in großtechnischen Anlagen gelöst, bei dem nachfolgende Verfahrensschritte durchlaufen werden:
- dem Aufnehmen von Bildsequenzen fallender Granulatpartikel mittels einer Farbkamera,
- dem Ermitteln prozeßspezifischer Parameter der Granulatpartikel an einer der Farbkamera nachgeordneten, die aufgenommenen Bildsequenzen auswertenden Recheneinheit,
- dem Übermitteln der prozeßspezifischen Parameter an eine Reglerstruktur, welche einen Qualitäts- und einen Quantitätsregler enthält, über welche die Granulationsanlage mittels Fuzzy-Logik-Bausteinen geregelt wird.

Die mit der erfindungsgemäß vorgeschlagenen Verfahrensweise erzielbaren Vorteile sind vor allem darin zu erblicken, daß eine Endqualitätskontrolle des erhaltenen granulierten Produktes automatisch, und zwar in Echtzeit durchgeführt werden kann, so daß arbeitsaufwendige Laboranalysen minimiert werden oder ganz unterbleiben können. Durch Einsatz einer Auflichtbeleuchtung zur Aufnahme der fallenden Granulate in Kombination mit einer Kamera, ist es mit Hilfe einer digitalen Bildverarbeitungssoftware möglich, die Korngrößenverteilung zu messen und eine Farbbeurteilung des Produktes in Echtzeit vorzunehmen. Durch Einsatz des erfindungsgemäß vorgeschlagenen Verfahrens lassen sich bei großtechnischen Granulationsprozessen Siebungen und Fraktionsbildungen vermeiden und eine auf subjektives Empfinden basierende Produktbeurteilung bei der Endqualitätskontrolle in der Produktion eliminieren.

Mit dem erfindungsgemäß vorgeschlagenen Verfahren lassen sich bei der Aufnahme der Bildsequenzen der fallenden Granulationspartikel deren Korngröße sowie die Korngrößenverteilung nach projizierter Partikelfläche in Echtzeit aufnehmen. Daneben ist durch Einsatz einer Farbkamera, beispielsweise einer CCD-Zeilen- oder Arraykamera, in Kombination mit einer Auflichtbeleuchtungseinrichtung während der Aufnahme der Bildsequenzen der fallenden Granulatpartikel deren Rundheit meßbar. Werden die Bildsequenzen der fallenden Granulatpartikel mittels einer Farbkamera aufgenommen, kann in Echtzeit ferner die mittlere Farbe des einzelnen Granulatpartikels, die Homogenität der Farbe und die Sprenkligkeit der Farbe an den jeweiligen Granulatpartikeln gemessen werden. Bei der Aufnahme einer Bildsequenz lassen sich somit mehrere, die Produktqualität charakterisierenden Parameter in Echtzeit aufnehmen, die einer nachgeordneten, vorzugsweise digital erfolgenden Weiterverarbeitung der Signale zur Ermittlung geeigneter, den Prozeß beeinflussender Regelgrößen zugrundegelegt werden können.

Das erfindungsgemäß vorgeschlagene Verfahren bzw. die Aufnahme der Bildsequenzen kann je nach Feuchte und Konzentration der Granulatpartikel entweder direkt an der Anlagenkomponente, beispielsweise einer Fallschurre, einem Austragstrichter oder dergleichen vorgenommen werden oder an einem der jeweiligen Anlagekomponenten zugeordneten Feldeinheit vorgenommen werden, in welcher eine Produktverteilrinne, eine CCD-Kamera enthalten sind.

Die von der Farbkamera in regelmäßigen, frei vorwählbaren, an die Produktionsgeschwindigkeit des Granulierprozesses angepaßten Bildsequenzen aufgenommener Bilder werden in einer der Farbkamera nachgeschalteten Recheneinheit einer Bildanalyse unterzogen, innerhalb der in einer Bildauswertungsstufe ein Binärbild anhand eines Grauschwellenvergleichs erzeugt wird. Die Einzelaufnahmen einer Bildsequenz lassen sich in eine aussagekräftige, digital weiterverarbeitbare Vorlage überführen, aus welcher sich in anschließenden Bildverarbeitungsschritten eine Korngrößenverteilung sowie eine Mittelwertsbildung durchführen läßt.

Innerhalb der Bildanalyse erfolgt aus dem aufbereiteten Binärbild eine Ermittlung der Partikelverteilung sowie eine Mittelwertbildung pro Bildsequenz. Aus der in Echtzeit erfolgenden Bildanalyse lassen sich gemäß des erfindungsgemäß vorgeschlagenen Verfahrens prozeßspezifische Parameter ermitteln, die auf einer Datenausgabe - beispielsweise dem Monitor eines Industrie-PCs - kontinuierlich als Kurvenzüge in der Meßwarte einer Granulieranlage angezeigt werden können. Die einzelnen Prozeßparameter wie beispielsweise die mittlere Korngröße, die mittlere Korngrößenverteilung, die Sprenkligkeit, die Homogenität der Farbgebung der einzelnen Granulatpartikel lassen sich in kontinuierlichen Kurvenzügen über die Prozeßzeit, die in frei vorgebbaren Unterteilungen entsprechend der Datenverarbeitungskapazität der Recheneinheit vorwählbar ist, der Meßwarte anzeigen.

Neben einer transparenten Darstellung der Prozeßparameter einer Granulieranlage können der Recheneinheit anhand der Bildanalyse ermittelte prozeßspezifische Parameter einer Reglerstruktur eingangsseitig aufgegeben werden, welche anhand von Fuzzy-Logik-Bausteinen die Granulieranlage hinsichtlich des Granulatrücklaufs, der Sollwertdifferenz, des Dampfdurchsatzes sowie hinsichtlich des mittleren Korndurchmessers d₅₀ ,um nur einige prozeßspezifische Parameter zu nennen, regelt.

In einer Ausgestaltungsvariante des erfindungsgemäß vorgeschlagenen Verfahrens kann die Echtzeitbildanalyse an rieselfähigen Feststoffprodukten zur Ermittlung von Färbung oder Beschichtung beispielsweise an Dragees oder Tabletten erfolgen, wobei die in der Echtzeitbildanalyse ermittelten prozeßspezifischen Parameter in einen Beschichtungsprozeß zurückgekoppelt werden können.

Das erfindungsgemäß vorgeschlagene Verfahren eignet sich zur Anwendung bei Kunststoffgranulatproduktion, wobei das Granulat in nachfolgenden Arbeitsschritten Extrusionseinheiten zugeführt werden kann; ferner ist eine Anwendung des erfindungsgemäß vorgeschlagenen Verfahrens bei der Waschmittelproduktion möglich. Weitere Anwendungsfälle des erfindungsgemäß vorgeschlagenen Verfahrens liegen bei pharmazeutischen Produkten wie auch in der Lebensmittelproduktion.

Anhand der Zeichnung wird die Erfindung nachstehend näher erläutert.

Es zeigt:
- Figur 1: eine schematisch wiedergegebene Meßvorrichtung zur Ermittlung von Korngrößendurchmesser und Farbgebung von Granulatpartikeln,
- Figur 2: eine zeitliche Darstellung einiger Signale wie Korngröße, Farbschwankung, Farbhomogenität und Sprenkligkeit während eines ablaufenden Granulierungsprozesses,
- Figur 3: die schematische Darstellung eines Regelbausteines für einen Granulationsprozeß, in welchem Fuzzy-Logik-Bausteine eingesetzt werden,
- Figur 4: den Ablauf der Bildanalyse in seinen wichtigsten Teilschritten und
- Figur 5: eine detailliertere Ablaufsequenz der Auswertungsschritte, die während des Stadiums Bildauswertung der in Figur 4 genannten Bildanalyse durchlaufen werden.

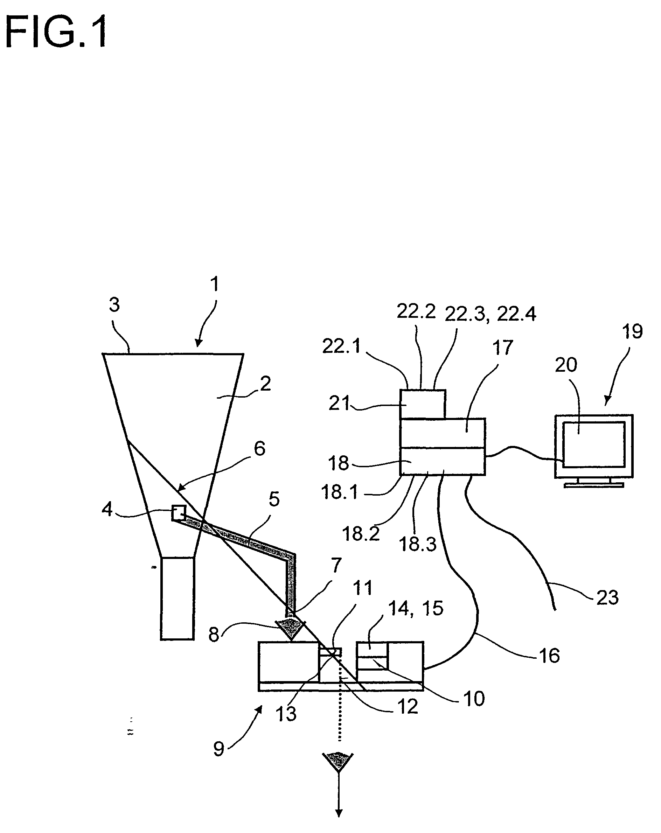

Aus der Darstellung gemäß Figur 1 geht eine schematische und stark vereinfachte Wiedergabe einer Meßvorrichtung zur Ermittlung von Korngrößendurchmesser und Farbgebung der erhaltenen Granulatkörner näher hervor.

In der Darstellung gemäß Figur 1 ist ein Fallschacht/Schurre einer Granulieranlage dargestellt. Der Fallschacht umfaßt einen Trichter, der eintragseitig 3 kontinuierlich in vertikale Richtung mit Granulatpartikeln 5 beaufschlagt wird. Die erhaltenen Granulatpartikel 5 können an einer Probeentnahmeöffnung 4, die beispielsweise als eine Klappe ausgestaltet sein kann, entnommen werden und einem Partikelaustrag zugeführt werden. Die Partikel werden über ein Leitungssystem einem Trichter 8 zugeführt, welcher an der Oberseite einer Feldeinheit 9 aufgenommen sein kann. Im kontinuierlich oder in bestimmten Zeitabständen befüllten Trichter 8 der Feldeinheit 9 sammelt sich ein Vorrat von Granulatpartikeln 5 an, der einer an der Feldeinheit 9 ebenfalls aufgenommenen Produktverteilrinne 11 zugeführt wird. Auf diese Weise läßt sich eine bestimmte Konzentration der Granulatpartikel 5 einstellen, die bei der Aufnahme von Bildsequenzen mittels einer Farbkamera 10 günstig ist. Das Ende der die Granulatpartikel 5 aus der Anlagenkomponente 2 ausleitenden Leitung ist mit Bezugszeichen 7 markiert. In der Feldeinheit 9 werden die Granulatpartikel, die in bestimmter vorwählbarer Verteilung in der Produktverteilrinne angeordnet werden, an deren Ende gefördert und fallen in der Objektebene 12 einer Farbkamera 10 auf einen Boden oder eine anders geartete Auffangvorrichtung der Feldeinheit 9. Während des Herabfallens der Granulatpartikel 5 vom Ende der Produktverteilrinne 11 in der Objektivebene 12 der Farbkamera 10 erfolgt die Aufnahme der Bildsequenz. Während der Aufnahme der Bildsequenz der fallenden Granulatpartikel 5 wird mittels der Farbkamera 10 die Korngröße und die Korngrößenverteilung nach projizierter Partikelfläche, ferner die Rundheit der erhaltenen Granulatpartikel 5 sowie die mittlere Farbe der einzelnen Granulatpartikel 5 ermittelt. Ferner läßt sich bei Einsatz einer CCD-Kamera 10 die Homogenität der Farbe sowie die Sprenkligkeit der Farbe auf den einzelnen von der Produktverteilebene 11 hinabfallenden Granulatpartikel 5 ermitteln. Die Feldeinheit 5 enthält neben einer Produktverteilrinne 11 eine Auflichtbeleuchtung 14, die eine Blitzlichtquelle in Gestalt eines Stroposkops umfassen kann, um die Fallbewegung der Granulatpartikel 5 einzufrieren.

Neben der Aufnahme der Bildsequenzen der herabfallenden Granulatpartikel in einer Feldeinheit 9 kann bei Vorliegen bestimmter Prozeßparameter beispielsweise einer hohen Produktfeuchte und einer mäßigen Partikelkonzentration die Bildsequenz auch direkt an den in die Anlagenkomponente 2 herabfallenden Granulatpartikeln vorgenommen werden. Mit dieser Ausführungsvariante ließe sich der Transport der Granulatpartikel 5 in die Objektebene 12 der Farbkamera 10 einsparen.

Von der Feldeinheit 9 erfolgt der Datentransfer, d.h. die Übermittlung der Bildsequenz, die von der CCD-Kamera 10 aufgenommenen Videobilder an eine Recheneinheit 17, 21. Die Signalleitung kann als Koaxialkabel oder als serielle Signalleitung ausgestaltet sein.

Der Recheneinheit 17, 21 kann eine Schalteinheit zugeordnet sein, mit welcher über geeignete Ansteuersignale 18.1, 18.2 und 18.3 die Komponenten der Feldeinheit 9, d.h. das Ziehen einer Probe, das Auslösen von Kamera 10 und Auflichtquelle 14, die beispielsweise als Stroposkop beschaffen sein kann sowie die Ansteuerung der Produktverteilrinne 11 erfolgen kann. Die Auflichtquelle 14 kann beispielsweise eine Blitzlichtquelle, ein Stroposkop oder dergleichen sein, mit welchem Aufnahmen der fallenden Granulatpartikel 5 im Zeitraum zwischen 1 bis 10 µs möglich sind, um die Bewegung der Granulatpartikel 5 gewissermaßen einzufrieren. Der Vorteil der Verwendung einer Auflichtquelle 14 gegenüber dem Durchlichtverfahren ist darin zu erblicken, daß mittels der Auflichtquelle 14 Farbinformationen erhalten bleiben, die bei einer Aufnahme der Fallbewegung mittels des Durchlichtverfahrens verloren gingen. Ferner bleiben bei der Verwendung einer Auflichtquelle 14 zur Aufnahme der Bewegung der Granulatpartikel 5 Informationen über deren Oberflächenbeschaffenheit bestehen, die bei Verwendung des Durchlichtverfahrens verloren gehen würden. Mittels einer Messung der Fallbewegung der Granulatpartikel durch eine Auflichtquelle 14 lassen sich im Vergleich zum Durchlichtverfahren wesentlich mehr Informationen über die Beschaffenheit hinsichtlich der Oberfläche und der Farbgebung sowie der Sprenkligkeit der Granulatpartikel 5 festhalten. Ferner ist bei der Messung des Produktstromes direkt innerhalb des Trichters 2, wenn keine Möglichkeit der Probenpräparation besteht, bei der Verwendung des Durchlichtverfahrens der Umstand von Nachteil, daß mittels des Durchlichtverfahrens lediglich ein kontinuierlicher Produktvorhang aus Granulatpartikeln 5 erfaßt werden kann. Eine Auflösung einzelner Granulatpartikel 5 mittels des Durchlichtverfahrens bei der Aufnahme von Bildsequenzen unmittelbar im Trichter ist nicht möglich.

An der Recheneinheit 17, 21 werden anhand einer Bildanalyse 50, die nachstehend noch detaillierter beschrieben werden wird, die Bildsequenzen, die von der CCD-Kamera 10 aufgenommen worden sind, digital aufbereitet, so daß sie sich auf einer beispielsweise als Monitor 20 eines industriellen PCs gestalteten Ausgabeeinheit 19 darstellen lassen. Die in der Recheneinheit 17, 21 ermittelten Daten lassen sich über eine Netzwerkverbindung 23 auch weiteren beispielsweise als Streamer gestalteten Speichereinheiten zuführen, so daß ein Protokoll eines Anlagenbetriebes über einen längeren Zeitraum aufgenommen und abgespeichert werden kann.

In der Recheneinheit 17, 21 werden prozeßspezifische Parameter 22.1, 22.2, ..., 22.n ermittelt, die als Eingangsgrößen für einen Regler des Granulierprozesses dienen. Die prozeßspezifischen Parameter eines Granulierprozesses können beispielsweise sein die Korngröße 22.1, die Farbinformation 22.2, ferner die Homogenität der Farbbelegung 22.3 sowie die Sprenkligkeit der erhaltenen Granulatpartikel 5.

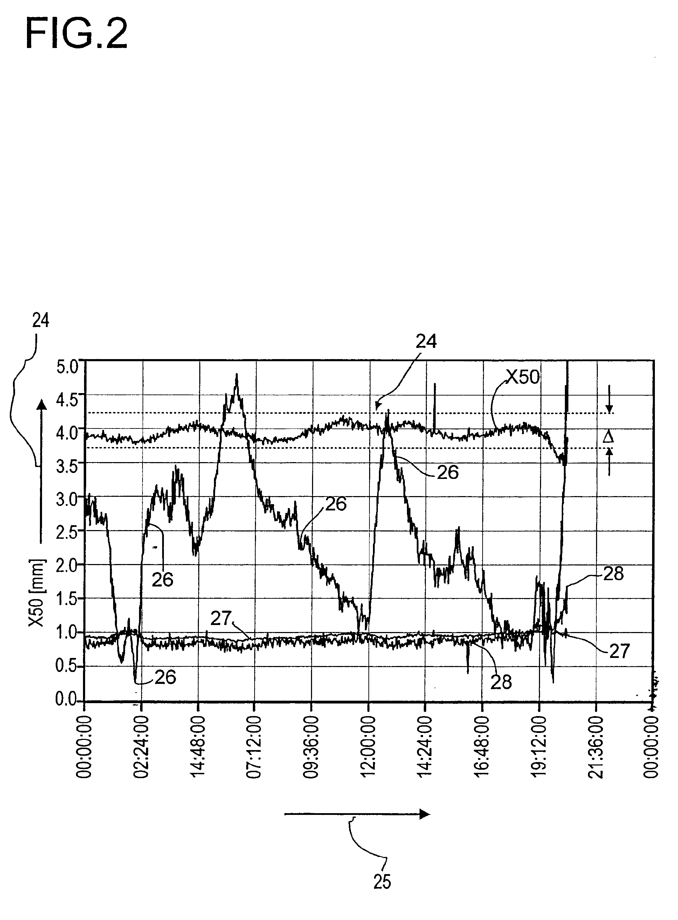

Im in Figur 2 wiedergegebenen Beispiel, welches beispielsweise auf dem Monitor 20 eines industriellen PCs 19 angezeigt werden kann, ist der Verlauf der Korngröße 24 über die Prozeßzeit 25 wiedergegeben. Aus dem Verlauf des Kurvenzuges 24 geht hervor, daß die Korngröße über die Prozeßzeit 25 etwa einen Tag innerhalb des Toleranzbandes, welches mit Δ bezeichnet ist, um den Wert 4 mm schwankt. Die Obergrenze des Toleranzbandes Δ ist durch den Wert 4,2 mm gegeben, während dessen untere Grenze durch den Wert 3,7 mm gekennzeichnet ist. Im Gegensatz zum recht gleichmäßigen Verlauf der Korngröße 24 über den Produktionstag ist der die Farbschwankung 26 repräsentierende Kurvenzug durch starke Schwankungen, d.h. sich einstellende Maxima und lokale Minima geprägt. Die mit Bezugszeichen 27 gekennzeichnete Farbhomogenität sowie die Sprenkligkeit 28 verläuft über den Produktionstag gesehen in engen Grenzen und nimmt nur gegen Ende des Tages lokale Maxima bzw. lokale Minima an. Mit der erfindungsgemäß vorgeschlagenen Darstellung der Kurvenzüge 24, 26, 27 bzw. 28 in Echtzeit auf einer Ausgabeeinheit 19 beispielsweise einer PC-Oberfläche 20 in der Meßwarte einer Granulieranlage, wird dem Bediener, insbesondere was die Informationen zur Farbgebung der erhaltenen Granulatpartikel 5 betrifft, eine objektive Information zugänglich. Während ein kontinuierlich Granulatproben inspizierender Bediener subjektive Farbeindrücke in die Qualitätsbeurteilung mit einbringt, ist dies bei einer CCD-Kamera 10 ausgeschlossen. Die erhaltenen Farbinformationen mittels des erfindungsgemäß vorgeschlagenen Verfahrens, seien sie an einer Feldeinheit 9 oder direkt an einer Anlagenkomponente 2 aufgenommen, sind daher als viel objektiver und aussagekräftiger anzusehen.

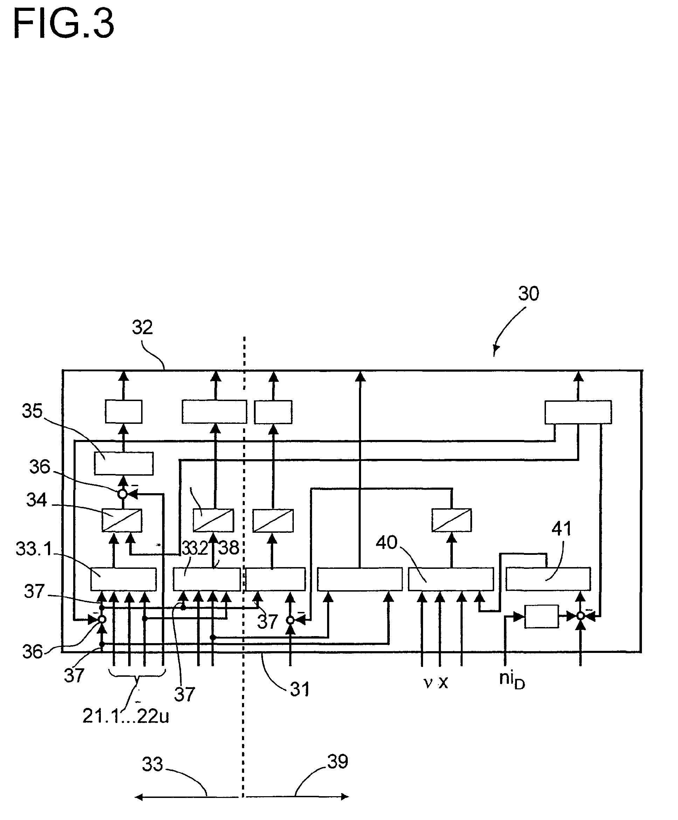

Aus der Darstellung gemäß Figur 3 ist das Konzept eines Anlagenreglers für einen Granulierprozeß entnehmbar, welcher Fuzzy-Logik-Bausteine enthält.

Die aus der in Figur 1 dargestellten Recheneinheit 17 bzw. 21 erhaltenen prozeßspezifischen Parameter stehen an der in Figur 3 schematisch dargestellten Reglerstruktur 30 eingangsseitig 31 zur Verfügung. Im wesentlichen läßt sich der Regler 30 gemäß der Darstellung in Figur 3 in einen Qualitätsregler 33 sowie in einen Quantitätsregler 39 unterteilen. Beide Reglerteile sind durch eine gedachte gestrichelte Linie voneinander getrennt. An der Eingangsseite 31 der Reglerstruktur 30 steht die bedeutsame Information 37 den mittleren Korndurchmesser d₅₀ betreffend als Eingangsgröße an. Ferner stehen eingangsseitig an einem in Fuzzy-Logik ausgebildeten Begrenzungsbaustein 40 Informationen zur Temperatur sowie zur Produktfeuchte sowie an einem Schätzer 41 umgeleitete Informationen über den aktuellen Dampfmassenstrom der Granulieranlage an. Im Qualitätsregler 33 der hier grob vereinfacht wiedergegebenen Reglerstruktur 30 einer Granulieranlage sind ein Rücklaufregler 33.1 in Gestalt eines Fuzzy-Logik-Controllers sowie ein Dampfregler 33.2 in Gestalt eines Fuzzy-Logik-Controllers enthalten. Beiden Bausteinen, die erst nach Überschreiten einer bestimmten gelernten Schwelle ein Ausgangssignal erzeugen, sind Integrationsbausteine 34 nachgeordnet, an welchen die erhaltenen Signale über die Zeit integriert werden. Dem Fuzzy-Logik-Controller 33.1 ist eine Integrationsstufe 34 nachgeordnet, der wiederum nach einem Summationspunkt 36 ein Ablaufregler 35 nachgeschaltet ist. Über diesen Teil wird die Rücklaufrate im Granulierprozeß geregelt, welcher in nicht unerheblichem Maße die Trägheit des Granulationsprozesses in bezug auf vorgenommene Regeländerungen beeinflußt. An der Ausgangsseite des Dampfreglers 33.2, welcher ebenfalls als Fuzzy-Logik-Controller beschaffen ist, steht das Signal 38 der Sollwertdifferenz des Dampfdurchsatzes an.

Im Qualitätsregler 39, der ebenfalls in die Reglerstruktur 30 eines Granulierprozesses eingebunden sein kann, befinden sich darüber hinaus Erfassungs- und Schätzeinrichtungen, die im wesentlichen die Umgebungseinflüsse, so z. B. Temperatur, Dampfmassenstrom und Produktfeuchte berücksichtigen und aufgrund von Schätzungen mittels des Schätzbausteines 41 unter Ermittlung einer Sollwert-Kreislaufmenge den Maischeeintrag in den Granulationsprozeß regeln.

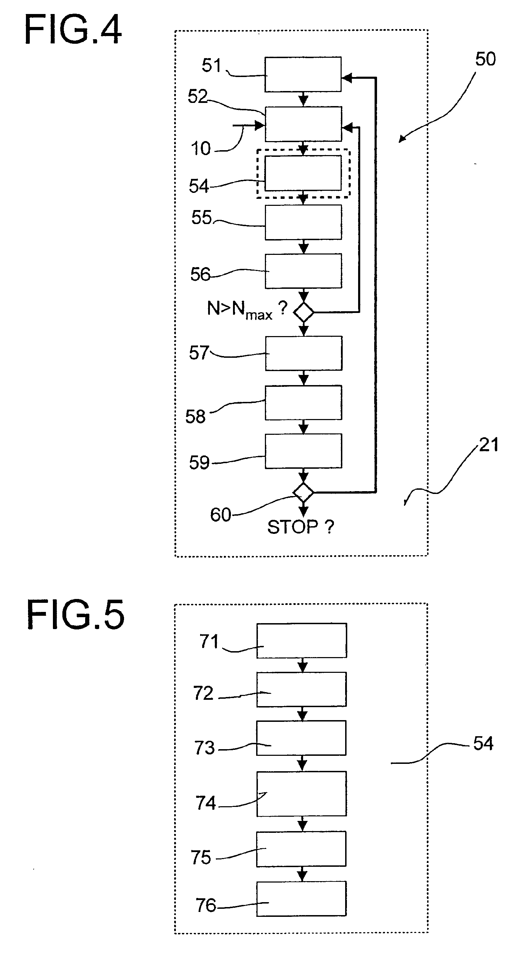

Aus der Darstellung gemäß Figur 4 geht der Ablauf der Bildanalyse in seinen wichtigsten Teilschritten näher hervor.

Von der Farbkamera 10, die beispielsweise als 3-CCD-Kamera ausgebildet sein kann, werden die aufgenommenen Bildsequenzen an der Schnittstelle Kamerabildeinspeisung 52 der Bildanalyse 50 zugeführt, die zuvor an einer Initialisierung 51 gestartet wurde. Über verschiedene Zwischenringe kann das Kamerabild auf die gewünschte Ebene fokussiert werden. Ein mittels einer Blitzlichtquelle 14 erzeugte Erhellung beleuchtet die Objekte, die aufzunehmen sind. Das optische System besteht aus Kamera 10, deren Objektiv sowie der Blitzlichtquelle 14. Die Aufnahmequalität, in der die einzuspeisenden Bildsequenzen der Bildanalyse 50 zugeführt werden, ist abhängig von der Schärfentiefe, die neben der Beleuchtung auch durch die Blende festgelegt ist. Das kontinuierlich erzeugte Kamerabild wird in eine Momentaufnahme umgewandelt und der Auswertesoftware in Form einer Matrix an der Bildeinspeisung 52 zur Verfügung gestellt. In der sich anschließenden Bildauswertungsstufe 54, deren Einzelschritte in Figur 5 näher dargestellt sind, erfolgt die Aufbereitung der von der Farbkamera 10 aufgenommenen Bilder. An die Bildauswertungsstufe 54 schließt sich ein Klassifikationsfilter 55 an, mit welchem die in der Bildauswertungsstufe 54 erhaltenen Resultate gefiltert werden und festgestellt wird, ob eine Weiterverarbeitung innerhalb der Bildanalyse 50 sinnvoll ist oder unterbleiben sollte.

In einer dem Klassifikationsfilter 55 nachgeordneten Belichtungssteuerungsstufe 56 wird die Belichtung, d.h. die Abstimmung der Kamera 10 auf die Ansteuerung der Blitzlichtquelle 14 und umgekehrt an der Feldeinheit 9 oder direkt an der Partikelaustragskomponente 2 koordiniert.

An die Belichtungssteuerungsstufe 56 schließt sich ein Vergleich an, in welchem abgeprüft wird, ob die im aufgenommenen Bild enthaltene Partikelanzahl eine maximal mögliche Partikelanzahl überschreitet. Wird dies verneint, erfolgt ein Rücksprung zur Bildeinspeisestufe 52, so daß Bilder weiterverarbeitet werden, die die Vergleichsstufe passieren. Nach Passage der Vergleichsstufe, in der abgefragt wird, ob die Partikelanzahl größer als die maximal zulässige Partikelanzahl ist, erfolgt bei 57 eine Korngrößenverteilungsberechnung, an welche sich bei 58 eine Mittelwertermittlung anschließt. Lediglich die Bilder, die die Bearbeitungsstufen 57 bzw. 58 der Bildanalyse 50 in Echtzeit durchlaufen haben, kommen zur Meßwertausgabe 59 bzw. 29 auf einem Monitor 20 an der Meßwarte der Granulieranlage. Mit Bezugszeichen 60 ist ein imaginärer Stopknopf bezeichnet, mit welchem die Bildanalyse 50 abgebrochen werden kann.

Aus der Darstellung gemäß Figur 5 geht eine detailliertere Ablaufsequenz der Auswerteschritte hervor, die während des Stadiums der Bildauswertung 54 während der Bildanalyse 50 durchlaufen werden. Mit Bezugszeichen 71 ist die Generierung eines Binärbildes aus der bei 52 eingespeisten Bildsequenz der CCD-Kamera 10 bezeichnet. Ein Bild besteht aus einer Matrix von Grauwerten zwischen 0 und 255. Die Zahl 0 steht für einen schwarzen Bildpunkt, während die Zahl 255 für einen weißen Bildpunkt steht. Über eine fest einzustellende Grauwertschwelle wird ein Binärbild 71 erzeugt. Hierbei werden alle Punkte mit einem Grauwert unterhalb der Grauwertschwelle in einen schwarzen Bildpunkt, alle Punkte mit einem Grauwert oberhalb der Grauwertschwelle in einen weißen Bildpunkt umgewandelt, so daß ein Übergang von einem Originalbild, aufgenommen über die CCD-Kamera, in ein Binärbild 71 erfolgt. Im Binärbild 71 werden die einzelnen Objekte auf ihre Größe überprüft. Objekte mit einer Größe, die über bzw. unter einer bestimmten Pixelanzahl liegt, werden gelöscht. Das Löschen erfolgt in der der Binärbildgenerierung 71 nachgeschalteten Löschungsstufe 72, die als ein Größenfilter anzusehen ist. In einer Maskierungsstufe 73 wird aus dem Binärbild 71 eine Maske erzeugt, welche über das Originalbild gelegt wird. Nur die einander entsprechenden Objekte werden weiter ausgewertet. Mittels eines Filters werden in einer vorgebbaren Intervallbreite Minima der Differenzen der Grauwerte benachbarter Bildpunkte ermittelt, so daß sich Korngrenzen zwischen zusammenhängenden Granulatpartikeln ermitteln lassen. Alle entdeckten Minima's werden in einer weiteren Filterstufe 74 mit schwarzen Bildpunkten markiert.

In einer sich anschließenden Bearbeitungsstufe der Bildanalyse erfolgt im nachgeschalteten Bearbeitungsschritt 75 eine UND-Verknüpfung der einzelnen Bildpunkte mit den Bildpunkten aus der direkten Umgebung. Dieser Vorgang führt zu einer Kontraktion der einzelnen Objekte, wobei die Anzahl der Wiederholungen eingestellt werden kann. Die Güte der Kontraktion ist ausschlaggebend für das Trennungsergebnis. In einer der Kontraktionsstufe 75 nachgeschalteten Expansionsstufe 76 erfolgt eine ODER-Verknüpfung der einzelnen Bildpunkte mit den Bildpunkten der direkten Umgebung, so daß eine Expansion der Objekte erzielt werden kann. Das auf diese Weise weiterverarbeitete Bild wird zur Bestimmung der Korngrößenverteilung wieder in ein Binärbild 71 umgewandelt. Dieses Binärbild 71 ist repräsentativ für die Trennung zusammenhängender Körner.

Nach einer Überlagerung von Originalbild und endgültig bearbeitetem Binärbild 71, d.h. nach Durchlaufen von Kontraktion 75 und Expansion 76, läßt sich die Auswahl der ausgewerteten Objekte deutlich erkennen. Eine Berechnung der Verteilung findet erst dann statt, wenn eine voreingestellte Mindestanzahl die genannte Bildanalyse 50 durchlaufen hat.

Das vorstehend beschriebene Verfahren eignet sich in hervorragender Weise zur Regelung einer Düngemittelanlage mit Hilfe von Online-Meßergebnissen der Produktparameter Korngrößenverteilung bzw. Produktfeuchte. Es lassen sich wesentlich bessere Produktqualitäten erreichen und bei einer auszulegenden Neuanlage läßt sich der Laboranalyseaufwand von vorneherein auf ein unabdingbares Minimum reduzieren. Das vorstehend beschriebene Verfahren läßt sich in der Düngemittelherstellung oder bei allen möglichen Partikelherstellungsverfahren einsetzen, so beispielsweise bei der Kunststoffgranulatproduktion hinsichtlich der Farbe und der Reinheit der eingesetzten Kunststoffe, bei der Waschmittelproduktion hinsichtlich der Qualitätssicherung von Durchmesser und Beschaffenheit der Waschmittelperlen, was deren Löslichkeit in unterschiedlich kalkhaltigem Wasser signifikant beeinflußt. Eine weitere Anwendungsmöglichkeit des erfindungsgemäß vorgeschlagenen Verfahrens liegt bei pharmazeutischen Produkten hinsichtlich der Prüfung von einzelnen Dragees bzw. Tabletten.

Eine weitere Anwendungsmöglichkeit des erfindungsgemäß vorgeschlagenen Verfahrens liegt in der Lebensmittelproduktion hinsichtlich des Granulierens und des Coatens (Beschichtens) von Bonbons, Smarties oder dergleichen.

### Bezugszeichenliste

- 1: Fallschacht/Schurre
- 2: Trichter
- 3: Eintrag
- 4: Probenentnahmeöffnung
- 5: Granulatpartikel
- 6: Klappe
- 7: Probeleitung
- 8: Trichter
- 9: Feldeinheit
- 10: CCD-Kamera
- 11: Produktverteilrinne
- 12: Objektivebene Kamera
- 13: Makroobjektiv
- 14: Auflichtquelle
- 15: Ringleuchte
- 16: Signalleitung
- 17: Recheneinheit
- 18: Relaiskasten
- 18.1: Ansteuerung Probenentnahme
- 18.2: Ansteuerung Produktverteilrinne
- 18.3: Ansteuerung Kamera und Blitzlichtquelle 14
- 19: Ausgabeeinheit
- 20: Monitor
- 21: Regelrechner
- 22: Eingang prozeßspezifische Parameter
- 22.1: Korngrößenverteilung
- 22.2: Farbinformation
- 22.3: Farbhomogenität
- 22.4: Sprenkligkeit
- 23: Netzwerkverbindung
- 24: Korngröße
- 25: Prozeßzeit
- 26.: Farbschwankungskurve
- 27.: Farbhomogenitätskurve
- 28: Sprenkligkeitskurve
- 29: Darstellung auf Monitor
- 30: Reglerstruktur
- 31: Eingangsseite
- 32: Ausgangsseite
- 33: Qualitätsregler
- 33.1: Rücklaufregler (Fuzzy-Logik)
- 33.2: Dampfregler (Fuzzy-Logik)
- 34: Integrationsstufe
- 35: Ablaufregler
- 36: Summationspunkt
- 37: mittlerer Korndurchmesser d₅₀
- 38: Sollwertdifferenz Dampfdurchsatz
- 39: weiterer Qualitätsregler
- 40: Begrenzer (Fuzzy-Logik)
- 41: Schätzer (Fuzzy-Logik)

- 50: Bildanalyse-Ablauf
- 51: Initialisierung
- 52: Kamerabild-Einspeisung
- 53: Blitzsteuerung
- 54: Bildauswertung
- 55: Klassifikationsfilter
- 56: Belichtungssteuerung
- 57: Verteilungsberechnung
- 58: Mittelwertbestimmung
- 59: Meßwertausgabe
- 60: Stop

- 70: Bildauswertung
- 71: Binärbild (Grauwertschwellen)
- 72: Löschungsstufe (Größenfilter)
- 73: Maskierung
- 74: Minima-Filter
- 75: Kontraktionsstufe
- 76: Expansionsstufe

## Patentansprüche

1. Verfahren zur Überwachung und Regelung eines industriellen Granulationsprozesses in großtechnischen Anlagen mit nachfolgenden Verfahrensschritten:
- dem Aufnehmen von Bildsequenzen fallender Granulatpartikel (5) mittels einer Farbkamera (10) und einer Auflichtquelle (14),
- dem Ermitteln prozeßspezifischer Parameter (22.1, 22.2, ..., 22.n) der Granulatpartikel (5) in einer der Farbkamera (10) nachgeordneten, die aufgenommenen Bildsequenzen auswertenden Recheneinheit (17, 21),
- dem Übermitteln der prozeßspezifischen Parameter (22.1, 22.2, ..., 22.n) an eine Reglerstruktur (30), einen Qualitätsregler (33) und einen Quantitätsregler (39) enthaltend, mit denen die Granulationsanlage mittels Fuzzy-Logik-Bausteinen (33.1, 33.2; 40, 41) geregelt wird.

2. Verfahren nach Anspruch 1, **dadurch gekennzeichnet, daß** bei der Aufnahme der Bildsequenz der Granulatpartikel (5) deren Korngröße (22.1) und Verteilung nach projizierter Partikelfläche gemessen wird.

3. Verfahren nach Anspruch 1, **dadurch gekennzeichnet, daß** bei der Aufnahme der Bildsequenzen der Granulatpartikel (5) deren Rundheit gemessen wird.

4. Verfahren nach Anspruch 1, **dadurch gekennzeichnet, daß** bei der Aufnahme der Bildsequenzen der fallenden Granulatpartikel (5) die mittlere Farbe des einzelnen Granulatpartikels (5), die Homogenität der Farbe und die Sprenkligkeit der Farbe am Granulatpartikel (5) gemessen wird

5. Verfahren nach Anspruch 1, **dadurch gekennzeichnet, daß** die Bildsequenzen je nach Feuchte und Konzentration der Granulatpartikel (5) entweder direkt an der Anlagenkomponente (1) oder an einer über eine Probenentnahme (4, 5, 6) mit der Anlagenkomponente (1) verbundenen Feldeinheit (9) aufgenommen werden.

6. Verfahren nach Anspruch 1, **dadurch gekennzeichnet, daß** die Bildsequenzen der Farbkamera (10) in einer dieser nachgeschalteten Recheneinheit (17, 21) einer Echtzeit-Bildanalyse (50) unterzogen werden, innerhalb der in einer Bildauswertungsstufe (54) ein Binärbild (71) anhand eines Grauschwellenvergleiches erzeugt wird.

7. Verfahren nach Anspruch 6, **dadurch gekennzeichnet, daß** innerhalb der Bildanalyse (50) aus dem Binärbild (71) die Granulatpartikelverteilung (57) und die Mittelwertbildung (58) pro Bildsequenz erfolgt.

8. Verfahren nach Anspruch 6, **dadurch gekennzeichnet, daß** aus der in Echtzeit erfolgenden Bildanalyse (50) prozeßspezifische Parameter (22.1, 22.2, ..., 22.n) ermittelt werden, die auf einer Datenausgabe (29, 50) als kontinuierliche Kurvenzüge (24, 26, 27, 28) über die Prozeßzeit (25) dargestellt werden.

9. Verfahren nach Anspruch 8, **dadurch gekennzeichnet, daß** die prozeßspezifischen Parameter (22.1, 22.2, ..., 22.n) einer Reglerstruktur (30) eingangsseitig (31) zugeführt werden, welche anhand von Fuzzy-Logik-Bausteinen (33.1, 33.2; 40, 41) die Granulieranlage hinsichtlich des Granulatrücklaufs, der Sollwertdifferenz des Dampfdurchsatzes (38) sowie des mittleren Korndurchmessers d₅₀ (37) regelt.

10. Verfahren gemäß Anspruch 1, **dadurch gekennzeichnet, daß** eine Echtzeit-Bildanalyse (50) an rieselfähigen Feststoffprodukten zur Ermittlung von Färbung (22.2) oder Beschichtung der Granulatpartikel (5) erfolgt und die ermittelten Parameter in einem Beschichtungsprozeß zurückgekoppelt werden.

11. Verwendung des Verfahrens gemäß einem oder mehrerer der Ansprüche 1 bis 10 in der Düngemittelproduktion

12. Verwendung des Verfahrens gemäß einem oder mehrerer der Ansprüche 1 bis 10 in der Kunststoffgranulatproduktion.

13. Verwendung des Verfahrens gemäß einem oder mehrerer der Ansprüche 1 bis 10 in der Waschmittelproduktion.

14. Verwendung des Verfahrens gemäß einem oder mehrerer der Ansprüche 1 bis 10 für pharmazeutische Produkte.

15. Verwendung des Verfahrens gemäß einem oder mehrerer der Ansprüche 1 bis 10 in der Lebensmittelproduktion.
